# EUROPÄISCHE PATENTSCHRIFT

(11) **EP 0 632 608 B1**
(45) Veröffentlichungstag und Bekanntmachung des Hinweises auf die Patenterteilung: **12.09.2001**
(21) Anmeldenummer: 94108053.3
(22) Anmeldetag: 26.05.1994
(51) Int. Cl.: H04B 10/14

(54) **Optischer Sender zur gemeinsamen Übertragung von Analogsignalen und digitalen Signalen**
Optical emitter for common transmission of analogue and digital signals
Emetteur optique pour la transmission commune de signaux analogiques et numériques

(30) Priorität: 11.06.1993 DE 4319315
(43) Veröffentlichungstag der Anmeldung: 04.01.1995
(73) Patentinhaber: ALCATEL, 75008 Paris (FR)
(72) Erfinder: Bülow, Henning, D-71638 Ludwigsburg (DE); Krimmel, Heinz, D-70499 Stuttgart (DE)
(74) Vertreter: Knecht, Ulrich Karl, Dipl.-Ing.

(56) Entgegenhaltungen:
- EP-A- 0 261 423
- EP-A- 0 359 205
- ELECTRONICS LETTERS., Bd.24, Nr.10, 12. Mai 1988, STEVENAGE GB Seiten 611 - 613 W.I.WAY ET AL 'Simultaneous transmission of 2 Gbit/s digital data and ten FM-TV analogue signals over 16.5 km SM fibre'
- PATENT ABSTRACTS OF JAPAN vol. 15, no. 241 (E-1080) 21. Juni 1991 & JP-A-03 074 942 (NEC)

## Beschreibung

Die Erfindung betrifft einen optischen Sender gemäß dem Oberbegriff des Patentanspruchs 1.

Ein solcher Sender wird z.B. benötigt, wenn Signale herkömmlicher Dienste wie Telefon, Radio und analoges Kabel-TV zusammen mit digitalen Signalen, z.B. QAM-Signalen, wie sie z.B. für die Übertragung von CDV (Compressed Digital Video) vorgesehen sind, unter Verwendung eines Lasers oder einer Laserdiode optisch übertragen werden sollen.

Hier kommt es zu Problemen durch sogenanntes "Klipping", ein kurzzeitiges Verschwinden des optischen Trägers infolge Unterschreitens des Laser-Schwellstromes. Derartige Schwellstromunterschreitungen werden durch konstruktive Interferenz mehrerer analog modulierter Trägerfrequenzen verursacht, die zu einer Übersteuerung des Lasers zur Niederstromseite hin führen. Tritt eine solche Übersteuerung auch nur während einer extrem kurzen Zeit auf, so macht sie doch einen Wiederanlauf des Lasers erforderlich, der eine erheblich längere Zeit in Anspruch nimmt und sich bei der Übertragung von digitalen Signalen, z.B.QAM-Signalen, in einer hohen Bitfehlerrate bemerkbar macht.

Diese Problematik ist in einem Aufsatz von K. Maeda et al in Electronics Letters, Vol. 29, No. 7, Seite 640 wiedergegeben.

Aus der europäischen Anmeldung 0 359 205 A3
ist bekannt, daß analoge und digitale Signale über einen hybriden Koppler gekoppelt und mit einem gemeinsamen Sender übertragen werden. Zur Begrenzung der Amplitude der analogen Signale dient ein Abschwächer. Dieser Abschwächer kann aber den Effekt des "Klipping" nicht verhindern, da er keine Möglichkeit besitzt negative Amplitudenspitzen zu verhindern.

Aus der europäischen Veröffentlichung 0 261 423 A2 ist ein Sender bekannt, der analoge Signale und digitale Signale in demselben Frequenzband überlagert. Es werden hier keine Vorkehrungen getroffen, um ein Klipping zu unterbinden.

Aufgabe der Erfindung ist ein optischer Sender der eingangs genannten Art, bei dem keine Störungen durch Klipping auftreten und bei dem die Bitfehlerrate der digitalen Signale dementsprechend niedrig ist.

Diese Aufgabe wird durch die Merkmale des Patentanspruchs 1 gelöst.

Durch den Amplitudenbegrenzer wird das dem Modulationseingang des optischen Sendebauelementes zugeführte Signal bereits bevor es den darin enthaltenen Laser beeinflußt, in seiner Amplitudendynamik begrenzt, so daß eine Übersteuerung des Lasers bis zum Unterschreiten seines Schwellenstromes nicht mehr stattfinden kann. Es bleibt vielmehr ein Mindestwert für den Laserstrom erhalten, der die Erzeugung eines durch das digitale Signal modulierbaren optischen Trägers durch den Laser garantiert. Die Begrenzung der Modulationssignalamplituden durch einfaches Abschneiden extremer negativer Spitzen hat keine nachteiligen Wirkungen auf die zu übertragenden Signale, denn der Eingriff geht nicht über das hinaus, was im Übersteuerungsfalle durch den Laser ohnehin erfolgen würde.

Weiterbildungen des optischen Senders nach der Erfindung sind in den Unteransprüchen angegeben.

So sieht der Patentanspruch 2 eine Amplitudenbegrenzung nur für die zu übertragenden Analogsignale vor, während die mitzuübertragenden digitalen Signale, die eine geringe Amplitudendynamik aufweisen und dem Träger mit einem wesentlich geringerem Modulationsgrad aufmoduliert werden, den amplitudenbegrenzten Analogsignalen ohne Amplitudenbegrenzung zugemischt werden.

Patentanspruch 3 betrifft eine Möglichkeit, eine Amplitudenbegrenzung der Analog-Modulationssignale vorzunehmen, ohne den Modulationssignalen kontinuierlich Nichtlinearitäten hinzuzufügen, wie dies z.B. bei Einsatz antiparallel geschalteter Dioden (z.B. Schottky-Dioden) der Fall wäre.

Gemäß Patentanspruch 4 kann hierbei ein durch den Vergleich mit dem Schwellwert eventuell auftretender Zeitversatz zwischen dem Modulationssignal und dem Einsatzzeitpunkt der Begrenzung durch entsprechende Zeitverzögerung des Modulationssignals ausgeglichen werden.

Anspruch 5, schließlich, sieht eine Regelung eines zur Amplitudenbegrenzung verwendeten eingeprägten Potentials in Abhängigkeit der Häufigkeit auftretender Klipping-Vorgänge vor. Damit paßt sich die Begrenzung automatisch an unterschiedliche Modulationsgrade und unterschiedliche zu tolerierende Bitfehlerraten an.

Anhand von zwei Figuren soll nun ein Ausführungsbeispiel des optischen Senders nach der Erfindung beschrieben und seine Funktion erklärt werden.
- Fig. 1: zeigt eine Übersicht über die verschiedenen, gleichzeitig zu übertragenden Frequenzbereiche,
- Fig. 2: zeigt ein Blockschaltbild eines optischen Senders nach der Erfindung.

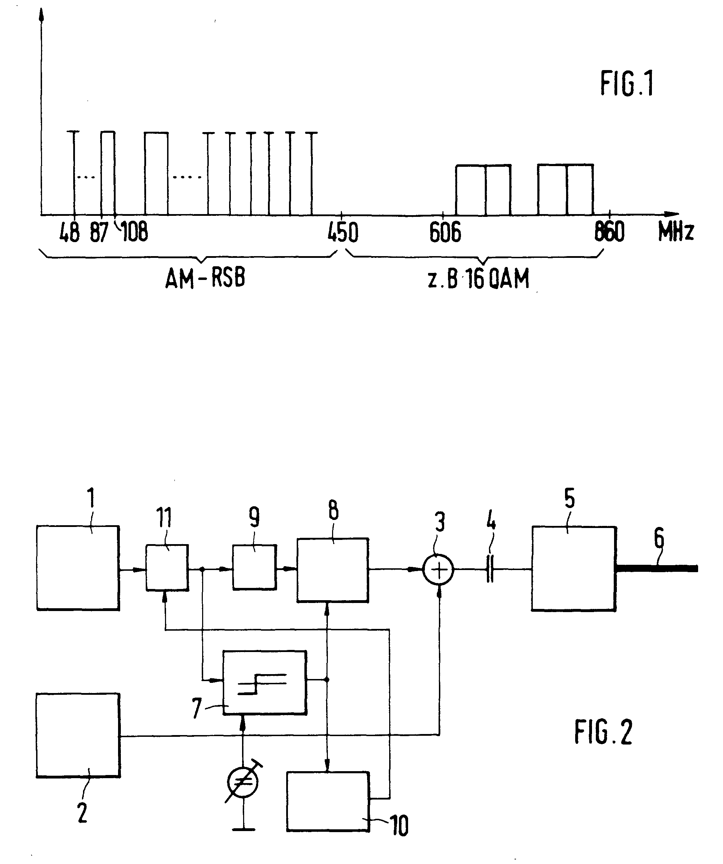

In Fig. 1 ist schematisch der Frequenzbereich bis 860 MHz und die Verteilung verschiedener Dienste innerhalb dieses Bereiches dargestellt. Im Bereich bis 450 MHz liegen z.B. Fernseh- und UKW-Rundfunkkanäle einschließlich Kanälen für den digitalen Hörfunk, die bisher über Kupfer-Coaxialkabel (Kabelfernsehen) übertragen werden. Zur Übertragung wird das zur Verfügung stehende Frequenzband in eine große Zahl von Kanälen unterteilt, denen jeweils ein Hilfsträger zugeordnet ist, der von den Trägern der benachbarten Kanäle einen vorgegebenen Frequenzabstand hat. Zur Übertragung werden die einzelnen Träger mit zu übertragenden Informationen amplitudenmoduliert und als AM-RSB-Signale frequenzmultiplex übertragen. Soll die Übertragung optisch erfolgen, werden die amplitudenmodulierten Träger zur Modulation eines optischen Sendebauelements verwendet. Hierbei werden gleichzeitig mehrere modulierte Träger dem optischen Sendebauelement, in der Regel einem Laser, oder einem mit einem Laser optisch gekoppelten Lasermodulator zugeführt.

Dabei kommt es im Modulationssignal zyklisch zu einer konstruktiven Überlagerung verschiedener Träger, die sich in einem extremen Momentanwert des Modulationssignals äußert und zur negativen Aussteuerungsseite hin, zur Abschaltung des Lasers wegen Unterschreitens der Laserschwelle führt.

Dieses kurzzeitige Abschalten (Klipping) des Lasers und das damit verbundene Fehlen des optischen Trägers während der Abschaltphase und des relativ trägen Wiederanlaufes des Lasers stört bei der Übertragung der AM-RSB-Signale nicht. Es stört jedoch, wenn, wie geplant, zusätzlich digitale Signale, z.B. QAM-Signale im Frequenzbereich oberhalb 600 MHz übertragen werden sollen, wie dies aus Fig. 1 hervorgeht. Hier führt es zu einer nicht tolerierbaren Erhöhung der Bitfehlerrate.

In Fig. 2 ist ein optischer Sender nach der Erfindung dargestellt, der die beschriebenen Störungen vermeidet.

Eine Signalaufbereitungsschaltung 1 enthält sämtliche zur Erzeugung der zu übertragenden AM-RSB-Signale erforderlichen, hier nicht im einzelnen wiedergegebenen Bauteile. Digitale 16QAM-Signale werden von einer entsprechenden Aufbereitungsschaltung 2 geliefert und in einem Summierer 3 den AM-RSB-Signalen hinzugefügt. Das Signalgemisch gelangt über eine kapazitive Kopplung 4 auf einen Modulationseingang eines optischen Sendebauelementes 5, z.B. eines Lasers, dessen optischer Ausgang auf einen Lichtwellenleiter 6 führt. Gemäß der Erfindung wird das Gemisch der AM-RSB-Signale in Fig. 2 nicht direkt dem Summierer 3 zugeleitet, sondern wird in einem vorgeschalteten Amplitudenbegrenzer 8 in seiner Amplitude begrenzt. Dies geschieht jedoch nicht mittels einer einfachen bekannten Klemmschaltung, z.B. zweier antiparallel geschalteter Schottky-Dioden - diese würden zusätzliche, unerwünschte Nichtlinearitäten zum Signal hinzufügen -, sondern mit einem zeitvarianten Netzwerk, welches von einer Schwellwertschaltung 7 angesteuert wird, wenn die Amplitude des von der Aufbereitungsschaltung 1 ausgegebenen Signalgemisches einen Momentanwert annimmt, der unter einer vorgegebenen Schwelle liegt, und welches dann eine vorgegebene, eingeprägte Spannung in die Ausgangsleitung einspeist, die ein Abschalten des optischen Sendebauelementes sicher verhindert.

Um Koinzidenz zwischen dem zu begrenzenden Signalwert und dem Wirksamwerden der Begrenzung herzustellen, ist im Eingang des Amplitudenbegrenzers 8 ein Zeitglied 9 vorgesehen, welches das Signalgemisch um die Zeitspanne verzögert, die die Schwellwertschaltung bis zur Ansteuerung des Amplitudenbegrenzers benötigt.

Um die Begrenzung z.B. unterschiedlichen Modulationsgraden und geforderten Bitfehlerraten anpassen zu können, besitzt der optische Sender einen Detektor 10, der die Anzahl der Begrenzungsvorgänge am Ausgang der Schwellwertschaltung 7 erfaßt und auswertet. In Abhängigkeit von der Häufigkeit solcher Begrenzungsvorgänge kann über einen Pegelsteller 11 das Ausgangssignal der Aufbereitungsschaltung 1 in seinem Pegel verändert werden.

## Patentansprüche

1. Optischer Sender zur gemeinsamen Übertragung eines Analogsignalgemisches und digitalen Signalen mit Aufbereitungsschaltungen (1,2) zur Bereitstellung des Analogsignalgemisches und der digitalen Signale und mit einem Laser enthaltenden optischen Sendebauelement (5), dessen Ausgangssignal mit den zu übertragenden Signalen moduliert wird,
**dadurch gekennzeichnet, daß** mit einem Modulationseingang des optischen Sendebauelements (5) ein Amplitudenbegrenzer (8) verbunden ist, welcher von einer Schwellwertschaltung (7) angesteuert wird, wenn die Amplitude des Analogsignalgemisches unter einer vorgegebenen Schwelle liegt und daß das Analogsignalgemisch dem optischen Sendebauelement (5) über den Amplitudenbegrenzer (8) zugeführt wird.

2. Optischer Sender nach Anspruch 1, **dadurch gekennzeichnet, daß** über den Amplitudenbegrenzer (8) das Analogsignalgemisch zugeführt wird und daß die digitalen Signale dem durch den Amplitudenbegrenzer (8) begrenzten Analogsignalgemisch vor Beeinflussung des optischen Sendebauelementes (5) zugemischt werden.

3. Optischer Sender nach Anspruch 1 oder 2, **dadurch gekennzeichnet, daß** der Amplitudenbegrenzer (8) den Modulationseingang des Lasers oder eines externen, mit dem Laser optisch gekoppelten Modulators mit einem den Laserbetrieb sicherstellenden eingeprägten Potential verbindet, sobald die Schwellwertschaltung (7), dem das zu begrenzende Modulationssignal ebenfalls zugeführt wird, feststellt, daß das Modulationssignal einen vorgegebenen, Laserbetrieb zulassenden Schwellwert unterschreitet.

4. Optischer Sender nach Anspruch 3, **dadurch gekennzeichnet, daß** das in seiner Amplitude zu begrenzende Analogsignalgemisch dem Amplitudenbegrenzer (8) zeitverzögert zugeführt wird.

5. Optischer Sender nach Anspruch 3 oder 4, **dadurch gekennzeichnet, daß** der Ausgang der Schwellwertschaltung (7) mit einer Detektorschaltung (10) verbunden ist, die die Häufigkeit auftretender Schwellwertunterschreitungen auswertet und abhängig davon den Pegel der dem optischen Sendebauelement (5) über den Amplitudenbegrenzer (8) zugeführten Signale verändert.

## Claims

1. An optical transmitter for the joint transmission of an analogue signal mixture and digital signals, with preparation circuits (1, 2) for supplying the analogue signal mixture and the digital signals, and with an optical transmitting component (5) which contains a laser and whose output signal is modulated with the signals to be transmitted,
**characterised in that** an amplitude limiter (8) is connected to a modulation input of the optical transmitting component (5), which amplitude limiter is actuated by a threshold circuit (7) when the amplitude of the analogue signal mixture is below a given threshold, and that the analogue signal mixture is fed to the optical transmitting component (5) via the amplitude limiter (8).

2. An optical transmitter according to Claim 1,
**characterised in that** the analogue signal mixture is fed across the amplitude limiter (8) and that the digital signals are added to the analogue signal mixture, which is limited by the amplitude limiter (8), before the optical transmitting component (5) is affected.

3. An optical transmitter according to Claim 1 or 2, **characterised in that** the amplitude limiter (8) connects the modulation input of the laser, or of an external modulator optically coupled to the laser, to an impressed potential which ensures the operation of the laser as soon as the threshold circuit (7), which is also supplied with the modulation signal to be limited, determines that the modulation signal undershoots a predetermined threshold permitting the operation of the laser.

4. An optical transmitter according to Claim 3,
**characterised in that** the analogue signal mixture to be limited in amplitude is fed to the amplitude limiter (8) with a time delay.

5. An optical transmitter according to Claim 3 or 4, **characterised in that** the output of the threshold circuit (7) is connected to a detector circuit (10), which evaluates the frequency with which the threshold is undershot, and as a function thereof changes the level of the signals fed to the optical transmitting component (5) via the amplitude limiter (8).

## Revendications

1. Emetteur optique pour la transmission commune d'un mélange de signaux analogiques et de signaux numériques avec des circuits de traitement (1, 2) pour la mise à disposition du mélange de signaux analogiques et des signaux numériques et avec un composant d'émission optique (5), contenant un laser, dont le signal de sortie est modulé avec les signaux à transmettre,
**caractérisé en ce qu'**avec une entrée de modulation du composant d'émission optique (5) est associé un limiteur d'amplitude (8) qui est excité par un circuit de valeur de seuil (7) lorsque l'amplitude du mélange de signaux analogiques se trouve au-dessous d'un seuil prédéterminé et en ce que le mélange de signaux analogiques est amené au composant d'émission optique (5) par l'intermédiaire du limiteur d'amplitude (8).

2. Emetteur optique selon la revendication 1,
**caractérisé en ce que** le mélange de signaux analogiques est amené par l'intermédiaire du limiteur d'amplitude (8), et en ce que les signaux numériques sont ajoutés au mélange de signaux analogiques limité par le limiteur d'amplitude (8) avant qu'ils n'influencent le composant d'émission optique (5).

3. Emetteur optique selon la revendication 1 ou 2,
**caractérisé en ce que** le limiteur d'amplitude (8) relie l'entrée de modulation du laser ou d'un modulateur externe couplé de façon optique avec le laser avec un potentiel appliqué assurant le fonctionnement du laser dès que le circuit de valeur de seuil (7), auquel le signal de modulation à limiter est amené également, constate que le signal de modulation effectue un dépassement inférieur d'une valeur de seuil prédéterminée permettant le fonctionnement du laser.

4. Emetteur optique selon la revendication 3,
**caractérisé en ce que** le mélange de signaux analogiques à limiter en amplitude est amené au limiteur d'amplitude (8) de façon temporisée.

5. Emetteur optique selon la revendication 3 ou 4,
**caractérisé en ce que** la sortie du circuit de valeur de seuil (7) est reliée à un circuit de détection (10) qui évalue la fréquence des dépassements inférieurs de la valeur de seuil qui apparaissent, et en fonction de cela, modifie le niveau des signaux amenés au composant d'émission optique (5) par l'intermédiaire du limiteur d'amplitude (8).
